# EUROPEAN PATENT APPLICATION

(11) **EP 1 071 295 A2**
(43) Date of publication of application: **24.01.2001**
(21) Application number: 00306223.9
(22) Date of filing: 21.07.2000
(51) Int. Cl.: H04Q 7/22

(54) **Messaging and status indication for wireless communication devices**

(30) Priority: 23.07.1999 US 359846
(71) Applicant: Phone.Com Inc., Redwood City, CA 94063 (US)
(72) Inventor: Stein, Lawrence M., San Jose, CA 95124 (US); Martin, Bruce K., Jr., Palo Alto, CA 94306 (US); Hitchings, Sinclair H., Jr., Palo Alto, CA 94303 (US); Rossmann, Alain S., Palo Alto, CA 94303 (US); Heumann, Gregory A., San Mateo, CA 94403 (US); King, Peter F., Half Moon Bay, CA 94019 (US)
(74) Representative: Ablett, Graham Keith

(57) **Abstract**

The present invention relates to a wireless communication system (100) having a storage device (112) for storing a list containing status information and identifiers for a plurality of previously identified wireless communication devices (102). A processor in a mobile communication device can retrieve and store a list containing status information and identifiers for a plurality of previously identified mobile devices from a remote server device and display them on the display screen thereof. By utilizing subscriber status information a user can determine the status of a mobile device associated with the intended recipient of a call or message prior to any attempt to contact that person. The interaction between the mobile device used by the user and the monitored mobile devices can be through a phone call or a text message, either of which can be initiated with minimal device interaction by using embedded contact information.

## Description

### BACKGROUND OF THE INVENTION

### 1. Field of the Invention

The present invention relates to wireless communication systems and, more particularly, to a wireless communication system utilizing subscriber status information to enable a user to determine the status of a mobile device associated with the intended recipient of a call or message prior to any attempt to contact that person.

### 2. Description of the Related Art

There are already several hundred million subscribers to wireless communication services throughout the world. With this proliferation of wireless communications, it is becoming more and more likely that parties will interact with one another in instances where the only means of communication for one or both parties is through wireless communication systems. Wireless communication refers to the situation in which at least one party is making use of a portable, wireless two-way interactive communication device and a wireless network. Portable, wireless two-way interactive communication devices can, for example, include personal digital assistants (PDAs), two-way pagers, palm-sized computers and mobile phones.

Wireless carriers operate wireless networks that support wireless communications between parties. These carriers, such as providers of cellular phone or pager services, typically have knowledge of the activation status (e.g. on or off) of serviced devices. Wireless carriers also tend to know the location of the portable wireless two-way interactive communication devices of its subscribers, at least within its range of coverage. This activation and location information may be used by wireless carriers for the purpose of centrally managing calls to and from its subscribers (e.g., tracking position or automatic call redirection).

Often one or both of the parties want to communicate with each other in real- time. Such real-time communications is offered by portable wireless two-way interactive devices, referred to as mobile devices herein, such as mobile or cellular phones and two-way pagers. However, even when one or both parties have mobile devices, real-time communications between them are available only when their mobile devices are in a mode of operation capable of receiving incoming communications. Hence, when one attempts to reach another party having a mobile device, which may be powered off (also referred to as off-line), the call does not go through. Instead, the calling party may hear a message to the effect of "the subscriber you have called is either out of range or the phone off." In this situation, the calling party has wasted time trying to contact an inactive mobile device. From the perspective of the carriers, their limited resources (e.g. channel capacity) have been utilized in an inefficient and unprofitable (i.e. calls to inactive devices are generally not billed) manner to contact an inactive mobile device.

It would be desirable to have apparatuses and methods which facilitate obtaining and using information regarding mobile device status information for mobile devices of interest.

### SUMMARY OF THE INVENTION

The present invention is directed to a communication system that makes available and utilizes status information so that users of the communication system are informed about the status of monitored mobile devices of interest before attempting to interact with those mobile devices. Subscribers having this service will have available near real-time information as to which associates (i.e. individuals or groups of interest to the subscriber for purposes of communication) may be contacted immediately and which associates are unavailable. Additional information relating to why an associate of interest is unavailable (e.g. "I'm in a meeting") or when they plan to be available may also be provided. Since many users will choose not to call mobile devices that are deactivated, wireless carriers may experience a reduction in unbilled resource utilization, since subscribers are generally not billed for calls to inactive devices. The interaction between the mobile device of the user and the monitored mobile devices can be through a phone call or a text message, either of which can be rapidly achieved with minimal user effort by the inventive apparatus and method.

Furthermore, the invention can be implemented in numerous ways, including as a method, an apparatus or device, a user interface, a computer readable medium, and a system. Several embodiments of the invention are discussed below.

As a mobile device, one embodiment of the invention includes a display screen, and computer program code for causing the display screen to display (i) an identifier for each of one or more portable, wireless two-way interactive communication device(s) and (ii) a status indicator pertaining to each of the one or more mobile devices, and a processor operatively connected to the display screen, wherein the processor operates to execute the program code.

As a method for operating a mobile device having a display screen, one embodiment of the invention includes the stages of receiving status information for one or more monitored mobile devices, and producing a screen display on the display screen in accordance with the status information received. The screen display produced may include identifiers for the monitored mobile devices and status indicators pertaining to the monitored mobile devices, with the status indicators indicating whether the monitored mobile devices were active or inactive during the last monitoring cycle. The screen display may include a short message from a user associated with a particular monitored mobile device (e.g. "I'm in a meeting").

As a user interface for a mobile device having a display screen and an user interface, one embodiment of the invention includes: a list of users from an address book associated with a first mobile device, one or more of the users being associated with other mobile devices; and a status indication indicating an operational status of a mobile device associated with one of the users on the list. The list of users and their status indications are displayed on the display screen of the first mobile device. Navigation through the list of users in an address book and selection of individual users is achieved using the user interface of the first mobile device.

As a computer readable medium including computer program code for operating a mobile device having a display screen, one embodiment of the invention includes: computer program code for receiving status information (e.g. identifiers, short messages and activation status for designated mobile devices); and computer program code for producing a screen display on the display screen in accordance with the status information. The screen display may include an identifier, a short message and a status indicator for designated mobile devices, the status indicator indicating whether the designated devices are active or inactive. Optionally, the computer readable medium may include code for interacting with a user to designate mobile devices for which status information is required.

As a computer readable medium including computer program code for operating a mobile device having a display screen, another embodiment of the invention includes: computer program code for receiving status information (e.g. an identifier, a short message and an activation status for designated mobile devices); computer program code for storing said received status information; computer program code for comparing user entered identifiers (e.g. a dialled phone number) with the received interface information; and computer program code for performing a desired action when an attempt is made to interact with a designated mobile device having an inactive status indicator or a designated mobile device experiences a change in its status.

The advantages of the present invention are numerous. Different embodiments or implementations may yield one or more of the following advantages. One advantage of the invention is that users can be informed of status information pertaining to designated mobile devices. Another advantage of the invention is that users are able to send, receive and reply to short messages to and from associates having mobile devices (e.g. instant messaging). Still another potential advantage of the invention is that status alerts can be provided when designated mobile devices experience a change in status. Yet another advantage of the invention is a privacy control mechanism that allows the users of the monitored mobile devices to control the release of their own operational status information since there may be occasions where the user does not want this information released or desires to have control of the release of this information.

Other aspects and advantages of the invention will become apparent from the following detailed description taken in conjunction with the accompanying drawings, which illustrate, by way of example, the principles of the invention.

### BRIEF DESCRIPTION OF THE DRAWINGS

The present invention will be readily understood by the following detailed description in conjunction with the accompanying drawings, wherein like reference numerals designate like structural elements, and in which:
Figure 1A is a block diagram of a wireless communication system which may be utilized to implement the method of the present invention;
Figure 1B is an illustration of a mobile device which may be used in conjunction with the wireless communication system described in Figure 1A to implement the method of the present invention;
Figure 2A is a diagram of a proxy server device which may be used in conjunction with the wireless communication system described in Figure 1A to implement the method of the present invention;
Figure 2B is a diagram of a representative data structure for a user account, which may be used to implement the method of the present invention;
Figure 2C is a block diagram of a mobile device which may be used in conjunction with the wireless communication system described in Figure 1A to implement the method of the present invention;
Figure 2D is a block diagram of a database which may be used in implementing the method of the present invention;
Figure 3A is a flow diagram showing the stages of the client-side associates list processing according to one embodiment of the invention;
Figure 3B is a flow diagram showing the stages of the server-side associates list request processing according to one embodiment of the invention;
Figure 3C is a flow diagram which provides additional details relating to access rights associated with the status information described in Figure 3B.
Figures 4A and 4B are flow diagrams which provide additional details of the client-side associates list processing described in Figure 3A;
Figure 4C illustrates screen displays representative operations for an associates list having iconic status indicators according to one embodiment of the invention;
Figure 4D illustrates screen illustrates an interactive associates list processing method according to an embodiment of the invention;
Figure 5A is a flow diagram of the steps involved in notification processing according to one embodiment of the invention;
Figure 5B is a block diagram of a presence detection system according to one embodiment of the invention;
Figure 6A is a flow diagram of application notification processing according to one embodiment of the invention;
Figure 6B illustrates a representative high priority notification message screen display;
Figure 6C illustrates a representative alert inbox screen display having a brief alert message;
Figure 6D is a flow diagram of message read and reply processing according to one embodiment of the invention;
Figure 6E illustrates a representative text message screen display that may be displayed on the display screen of the mobile device;
Figure 7A is a flow diagram of privacy settings processing according to one embodiment of the invention;
Figure 7B illustrates representative screen displays presenting an associates list and menu screens for setting of an alert; and
Figure 8 is a flow diagram of address book processing according to one embodiment of the invention.

### DETAILED DESCRIPTION OF THE INVENTION

The present invention is directed to a communication system that makes use of status information so that users of the communication system are informed about the status of designated portable wireless two-way interactive devices (also referred to as mobile devices herein) before attempting to establish contact with those devices. The method of communication between the mobile devices can be through a phone call or a text-based message, either of which can be rapidly achieved with minimal user effort (e.g. softkey activation). As such, a user of a mobile device is able to have an indication that the mobile device/associate (or devices/associates) of interest were active during a recent monitoring cycle prior to attempting to contact that device/associate (or devices/associates).

Mobile devices include, but are not limited to personal digital assistants (PDA) portable devices, cellular phones, palm-sized computing devices, and wireless capable remote controllers. It is not unusual for such devices to have less than 1% of the computing resources found in a personal computer. These mobile devices typically have a small display screen and a limited user interface mechanism (e.g., a phone keypad) for user interactions with server devices and wireless networks providing mobile subscriber services. These characteristics are useful in achieving the desired size, weight, power and mobility features which have proven to be important for mass-market mobile devices.

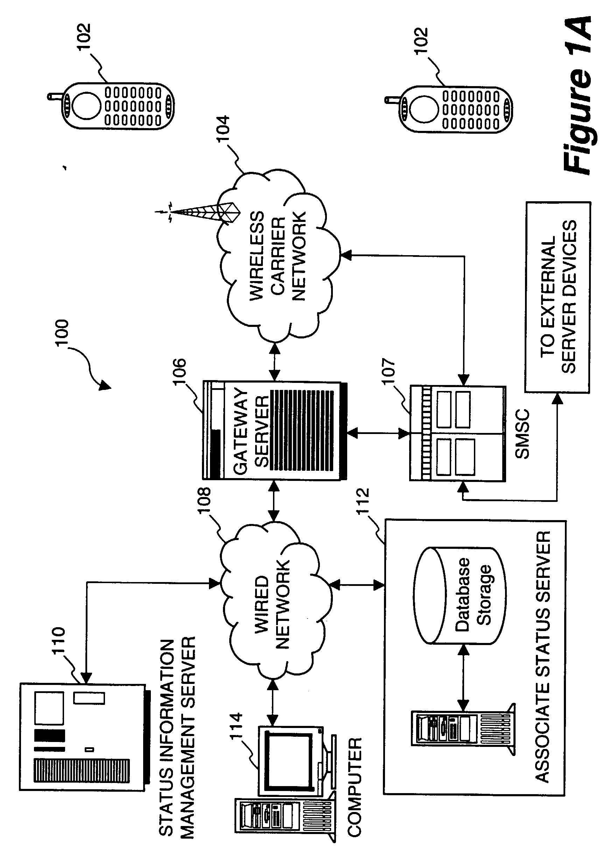

Embodiments of the invention are discussed below with reference to Figures 1A-8. However, those skilled in the art will readily appreciate that the detailed description given herein with respect to these figures is for explanatory purposes as the invention extends beyond these limited embodiments.

Figure 1A is a block diagram of a wireless communication system 100 which may be utilized to implement the method of the present invention. The wireless communication system 100 typically includes a plurality of mobile devices 102. The mobile devices 102 are supported by a wireless carrier network 104 that facilitates voice and data communications to and from the mobile devices 102. The wireless carrier network 104 couples to a wired network 108 through a gateway server 106. The wired network 108 is, for example, the Internet, a local area network (LAN), or a wide area network (WAN). The wireless carrier network 104 can be any of a variety of types of wireless networks, for example, Cellular Digital Packet Data (CDPD), Global System for Mobile Communications (GSM), Code Division Multiple Access (CDMA), Personal Handy Phone System (PHS) and Time Division Multiple Access (TDMA) networks.

Gateway server 106 can be referred to as a proxy server for the mobile devices 102 of wireless carrier network 104. Since the communication protocol used in wireless carrier network 104 is often different from that used in the wired network 108, one of the functions of the gateway server 106 is to translate from one communication protocol to another. One of ordinary skill in the art would understand that the functions of gateway server 106 may be performed by a network server device which includes or is capable of including a connection mechanism between wireless carrier network 104 and wired network 108.

Wireless communication system 100 includes a status information management server 110 and an associate status server 112, which may be a separate server device or its functions may be performed by gateway server 106. According to the present invention, mobile devices 102 can display and otherwise process lists of monitored associates, which may indicate not only an identifier for the users associated with particular mobile devices, but also status information for those mobile devices and short messages from the users (e.g. "I'll be available after 2 PM").

Status information management server 110 retrieves and stores status information for a plurality of mobile devices serviced by wireless network 104. Wireless network 104 monitors device status information for serviced devices for use in conjunction with network operation and maintenance. Associate status server 112 maintains a list or record of mobile devices/associates to be monitored for the subscribers (also referred to as users) of mobile devices 102. Status information for the monitored mobile devices/associates is managed and updated as required. In accordance with the principles of the present invention, this information may include monitored device activation status, changes in activation status and short messages from the users of the monitored devices.

A wireless carrier infrastructure is associated with wireless carrier network 104. For example, the wireless carrier infrastructure generally includes a base station and an operations and maintenance center. The base station controls radio or telecommunication links with the mobile devices serviced. The operations and maintenance center typically includes a mobile switching center that performs the switching of calls between the mobile devices and other fixed or mobile network users. Further, the operations and maintenance center manages mobile services, such as authentication and oversees the proper operation and setup of the wireless network. The wireless carrier infrastructure also maintains user accounts for each of the mobile network users. Status information for the mobile device may be associated with a user account. This status information may include user identification information, device activation status, and a short message from the user or location information.

According to one embodiment, the communication protocol used by status information management server 110 and the wired network 108 is the well known HyperText Transfer Protocol (HTTP) or Secure HyperText Transfer Protocol (HTTPS), a secure version of HTTP, and runs on Transmission Control Protocol (TCP). In one embodiment, the communication protocol between the wireless communication devices 102 and the gateway server 106 via the wireless carrier network 104 is Handheld Device Transport Protocol (HDTP) (formerly known as Secure Uplink Gateway Protocol (SUGP)) or Wireless Access Protocol (WAP).

The associate's list and short messages may be generated in a markup language such as Handheld Device Markup Language (HDML) and Wireless Markup Language (WML). HDML and WML are similar to HyperText Markup Language (HTML) in that they are tag based document languages. HDML and WML use a set of commands or statements specified in a group of cards (referred to as a deck) that specify how information is to be displayed on a display screen of the mobile devices 102 and how the mobile devices 102 operate with respect to user interaction with the display screen. Normally, a number of cards are grouped into the deck and the deck is exchanged between the mobile devices 102 and gateway server 106. Further, as would be understood by one having ordinary skill in the art, the invention may be practised by directly coupling the wireless carrier network 104 to the wired network 108 without using the gateway server 106. Alternatively, a server device contained within the framework of the wired network 108 could perform the functions of the gateway server 106.

Note that the mobile devices 102 can also be referred to as wireless client devices or wireless communication devices. The mobile devices 102 can take a variety of forms, including personal digital assistants (PDAs), mobile telephones (e.g., cellular telephones), etc. Typically, as noted above, the mobile devices 102 include a screen display and have processing capabilities, which is less robust than that associated with conventional personal computers.

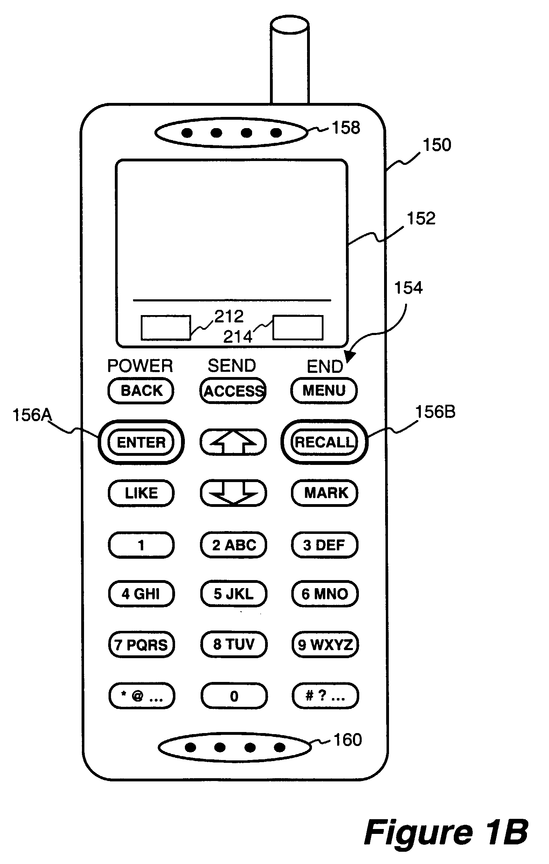

Figure 1B is an illustration of a mobile device 150, which may be used in conjunction with the wireless communication system described in Figure 1A to implement the method of the present invention. Mobile device 150 may be, for example, a mobile telephone suitable for use as mobile devices 102 illustrated in Figure 1A. The wireless communication device 150 includes a display screen 152, a keypad 154, softkeys (156A and 156B) and associated softkey identifiers 158A and 158B that allows a user thereof to interact with mobile device 150. Additionally, the mobile device 150 includes a speaker 158 and a microphone 160 as may be found in conventional mobile telephones.

Keypad 154 includes, in one embodiment, a typical phone keypad and various control buttons, such as generic buttons and navigation (e.g., upward and downward arrow) buttons. The typical phone keypad includes twelve buttons, of which ten buttons are consecutively numbered 0 to 9, one button is for "*" sign, and another button is for "#" sign. Although not necessary for practising the invention, the keypad 154 provides convenient means for a user to interact with mobile device 150. It should be understood, by one having ordinary skill in the art, that having a phone keypad is not a requirement to practice the present invention. Some mobile devices have no physical keys at all, such as those palm-sized computing devices that use soft keys or icons as an input mechanism.

In accordance with the principles of the present invention, a user of a mobile device (e.g. mobile device 102) has access to status information relating to one or more monitored mobile devices. The particular mobile devices selected for monitoring may be associated with a user/network application (e.g. an address book), input by the user directly, or generated by a third party as a result of some affiliation between the user/mobile device receiving the status information and the users/mobile devices being monitored. Regardless of the means of identification, a list or grouping of mobile devices to be monitored for a particular user is stored on a server device (e.g. associates status server 112). The associates status server 112 periodically requests status information for monitored mobile device. These requests are forwarded to the status information management server 110 which retrieves the requested status information for the monitored mobile devices from associated network resources (i.e. a Home Location Register (HLR) or a Visitor Location Register (VLR) associated with a monitored mobile device). This information is stored and passed to the requesting entity (e.g. users of mobile devices 102) exercising control over the list/grouping of monitored mobile devices described above. One of ordinary skill in the art would understand that the functions of the status information management server 110 and the associates status server 112 may be performed by a single server device. Additionally, the functions of both the status information management server 110 and the associates status server 112 may be performed by gateway server 106.

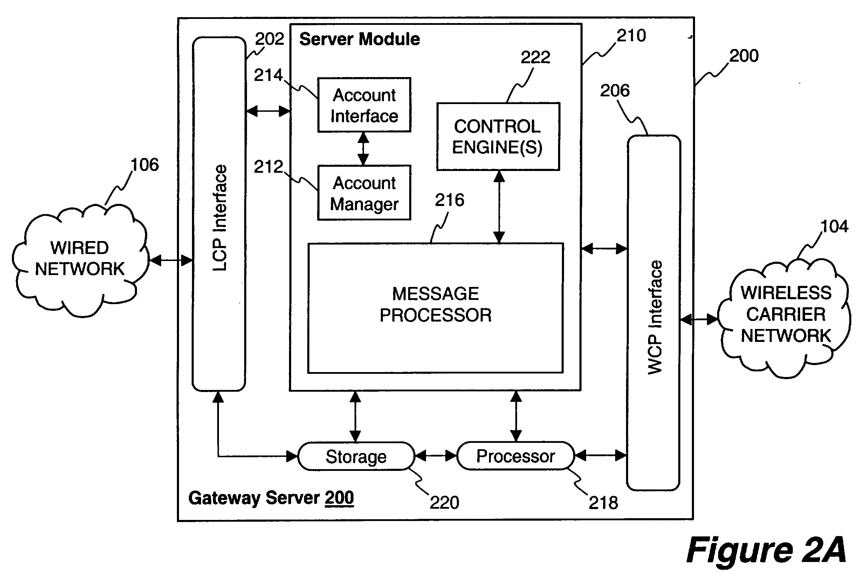

Figure 2A is a block diagram of a gateway server device 200, which may be used in conjunction with the wireless communication system described in Figure 1A to implement the method of the present invention. Gateway server device 200 is, for example, gateway server 106 of Figure 1A. Gateway server device 200 is coupled between the wired network 108 and the wireless carrier network 104 of Figure 1A and performs tasks associated with network access, protocol conversion and account management. To avoid obscuring the primary aspects of the present invention, well-known methods, procedures, components and circuitry associated with gateway server device 200 are not described in detail.

Gateway server device 200 includes a Land Control Protocol (LCP) interface 202 that couples to wired network 108, and a Wireless Control Protocol (WCP) interface 206 that couples to the wireless carrier network 104. A server module 210 is coupled between the LCP interface 202 and the WCP interface 206.

Server module 210 performs traditional server processing as well as protocol conversion processing from one communication protocol to another communication protocol (i.e. between the protocol used by wireless networks and protocols used by the wired networks). According to one embodiment, the protocol conversion processing can be implemented as a separate module referred to as a mapper. In the case of protocol conversion between HDTP and HTTP, the conversion is a data mapping relationship. As would be understood by those skilled in the art, WCP interface 206 can be readily replaced by another interface module when the wireless carrier network 104 uses a different communication protocol; the same is true of LCP interface 202 when the wired network 108 uses a different communication protocol.

The server module 210 also includes an account manager 212 and an account interface 214. Account manager 212 manages a plurality of user accounts for the mobile devices serviced by the proxy server device 200. It is understood that the user accounts may be stored in another network server coupled to the proxy server device 200. In other words, the user accounts can be kept in a database that is physically placed in another computing device coupled to the wired network 108.

Gateway server device 200 also includes a processor 218 and a storage component 220. Processor 218 performs operations in accordance with instructions from server module 210. It would be understood by those skilled in the art that gateway server device 200 is a piece of hardware equipment that includes one or more processors (e.g., processor 218), working memory (e.g., storage 220), buses, interfaces and other components. Server module 210 includes program code, which causes proxy server device 200 to perform designated tasks. It would also be understood by those skilled in the art that proxy server device 200, may perform the functions of the associates status server (e.g. 112 of Figure 1A).

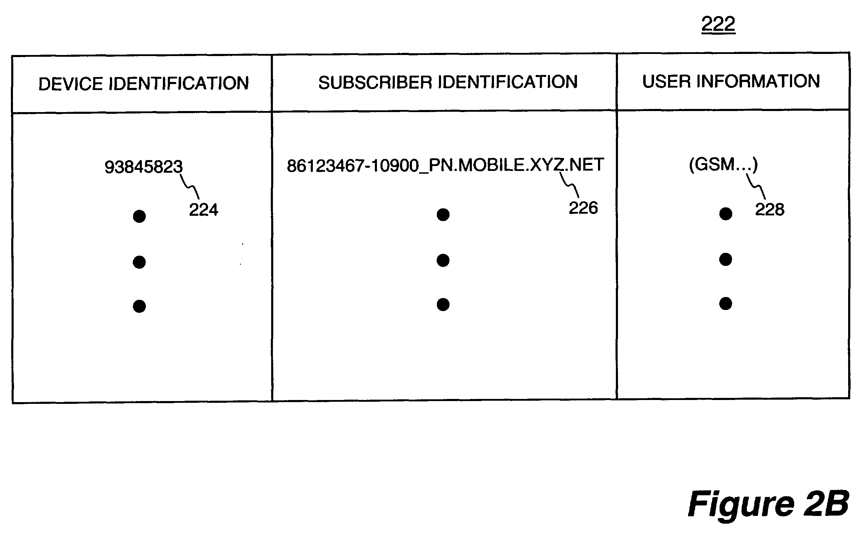

Figure 2B is a diagram of a representative data structure 222 for a user account, which may be used to implement the method of the present invention. As previously noted gateway server device 200, which may be gateway server 106 of Figure 1A, maintains user accounts for various users or subscribers. These user accounts are also known as subscriber accounts. The representative data structure 222 includes a device ID field 224, a subscriber ID field 226, and a user information field 228. Device ID field 224 includes a device ID, and subscriber ID field 226 includes a subscriber ID. For example, in Figure 2B, the representative device ID is "93845823", and the representative subscriber ID is "861234567-10900_pn.mobile.xyz.net". The user information 228 can include account configuration information, user preferences, etc. These lists or groups of mobile devices/associates to be monitored may be stored in association with the user account file for the entity receiving the status information for the monitored mobile devices.

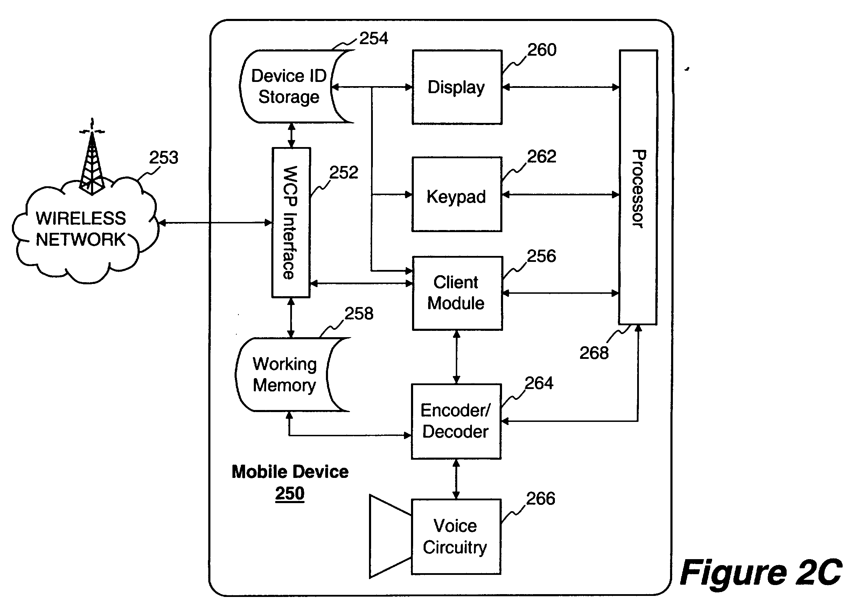

Figure 2C is a block diagram of a mobile device 250, which may be used in conjunction with the wireless communication system described in Figure 1A to implement the method of the present invention. Mobile device 250 includes a WCP interface 252 that couples to wireless network 104 via a radio-frequency (RF) transceiver (not shown) to receive incoming and outgoing signals. A device identifier (ID) storage 254 supplies a device ID via WCP interface 252.

The device ID identifies a specific code that is associated with mobile device 250. The device ID is used by gateway server device 200 to associate the mobile device 250 with a user account stored in the gateway server device 200. The device ID can be a phone number of the device or a combination of an IP address and a port number. An example of a combination of an IP address and a port number is 204.163.165.132:01905 where 204.163.165.132 is the IP address and 01905 is the port number. The device ID is further associated with a subscriber ID (i.e. in the Equipment Identification Registry (EIR) and the Home Location Registry (HLR)) authorized by a wireless carrier network as part of the procedures to activate a subscriber account for the mobile device 250. The subscriber ID may take the form of, for example, 861234567-10900_pn.mobile.att.net by AT&T Wireless Service. The subscriber ID is a unique identification for mobile device 250. Each of the mobile devices serviced by a proxy server device (e.g. gateway server device 106 of Figure 1) has a unique device ID that is associated with a respective user account.

Mobile device 250 also includes voice circuitry 266 (e.g., a speaker and a microphone) and the associated hardware (e.g., an encoder/decoder 264, a processor 268 and keypad circuitry 262) which provide telephony functions in a telephone mode of operation which is separate and distinct from a data mode of operation used when interfacing with a proxy server device. In the telephone mode of operation, a user can cause mobile device 250 to place a phone call to another party having a phone, either wireless or land-based.

Mobile device 250 includes a client module 256, which works in conjunction with processor 268 and the working memory 258 to perform the processing tasks performed by mobile device 250. These include: establishing a communication session with a proxy server device via a wireless network, requesting and receiving data via the wireless network, displaying information on the mobile device display screen through the use of display circuitry 260, and receiving user input from a user via a keypad controlled by keypad circuit 262. Additionally, client module 256 contains computer code to cause processor 268 to execute instructions to control the operation of, among other things, a browser. In one embodiment, the browser is a micro-browser, which typically requires less computing power and memory than the HTML browsers used in personal computers. One such micro-browser is available from Phone.com located at 800 Chesapeake Drive, Redwood City, CA 94063, the assignee of the present invention.

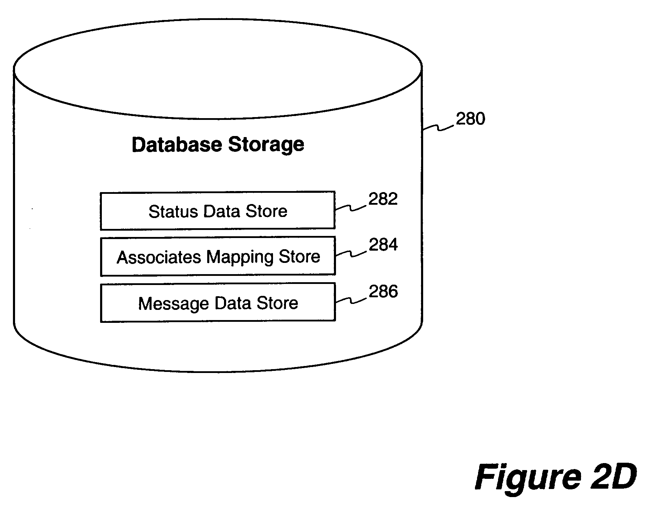

Figure 2D is a block diagram of database storage 280, which may be used in conjunction with the implementation of the method of the present invention. Database storage 280 includes a status data store 282, an associates mapping data store 284, and a message data store 286. Status data store 282 stores status information for monitored mobile devices on the user's associate list. Associates mapping data store 284 stores the user's lists of associates and any information required to retrieve status information for those associates (e.g. user identifiers and access rights). Message data store 286 stores messages being exchanged between subscribers or users of the wireless communication system 100. More specifically, message data store 286 stored in the database 280 may be used to store "instant text messages" that can be exchanged between mobile devices. Some of these messages may be stored by the user of a monitored mobile device and scheduled for delivery when an inquiry is made as to the status of that device. For example, if the user of a monitored mobile device intends to have their device off for the weekend they can create and store a message to that effect.

The status data store 282 stores, updates and manages status information for monitored mobile devices on a user's list. This status information includes the activation status of the monitored mobile device. The activation status may be active (on-line) , inactive (off-line) or inactive with the time period of inactivity given. The activation status represents the last known activation status of the monitored device as registered during a preceding monitoring cycle. Active or on-line typically means that the mobile device is registered with a wireless network and can send and receive messages (e.g. phone calls or data messages). A representative SQL table of a relational database that can implement the status data store 282 is as follows:

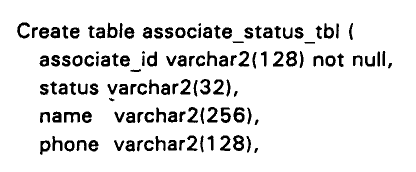

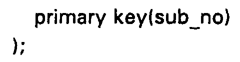

In this example, the associate identifier column represents an internal identifier used by the status data store 282 to identify a subscriber. The status column is used to hold the status of the subscriber's mobile device. The name column contains the subscriber's name. The phone column contains the phone number of the subscriber's mobile device. Hence, this SQL table not only provides status information for associates but also related information such as phone number and name, which may be used by user interfaces to facilitate communications.

The associate mapping data store 284 stores data identifying the associates of the user. The associate mapping data store 284 may also store information relating to the wireless carrier network providing service to the associate's mobile device and alert types to be provided. A representative SQL table of a relational database that can implement the associate mapping data store 284 is as follows:

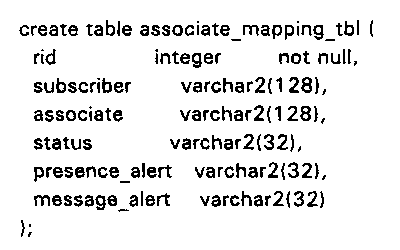

The subscriber column is the unique identifier representing the user (subscriber). The associate column is the unique identifier representing an associate of the subscriber (i.e., an associate is on the subscriber's associate list). The unique identifier representing an associate of the subscriber may include information relating to the carrier network providing service to the associate. The status column is used to hold the status of the subscriber's mobile device as registered during the most recent monitoring cycle. The message alert column determines whether the subscriber desires a message alert when the activation status of a monitored mobile device changes.

Note that alerts relating to activation status changes in monitored mobile devices may be sent to parties other than the subscriber who initiated status monitoring. For example, consider the situation where a subscriber desired to set up a teleconference with a plurality of associates having mobile devices and one of the associates was off-line. When the activation status of the off-line associate changes an alert could be sent to all parties concerned, notifying them that the teleconference could (or would) now proceed.

The message data store 286 is responsible for storing the text messages that users send to each other. A representative SQL table of a relational database that can implement the message data store 286 is as follows:

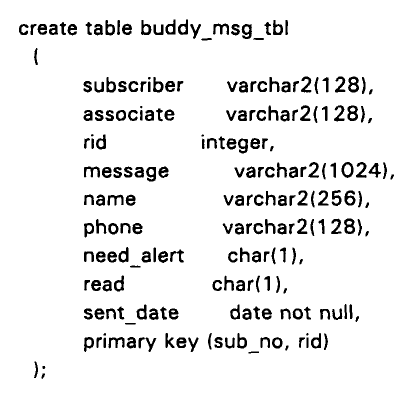

The message column contains the message, and the sent_date column contains the date the message was sent. The need_alert column provides an indication that the subscriber desires an alert when the activation status of a monitored associate's mobile device changes.

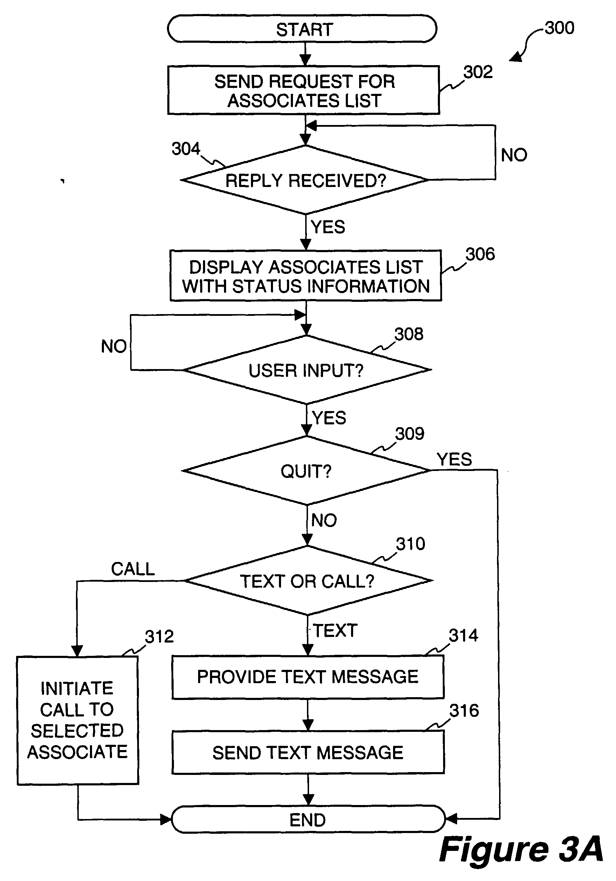

Figure 3A is a flow diagram showing the stages of the client-side associates list processing operation 300 according to one embodiment of the present invention. The associates list processing operation 300 is, for example, performed on a mobile device, such as the mobile devices 102 illustrated in Figure 1A.

Associates list processing operation 300 is initiated by user interaction via the user interface of the mobile device. Once initiated, a request for associates information is sent at 302 to the associates status server (e.g. associates status server 112 of Figure 1A). Then a determination is made 304 as to whether a reply to the request has been received from the associates status server. When a determination is made 304 that the reply has not yet been received, the associates list processing operation 300 awaits the reception of the reply until the reply is received or a time-out is reached. Once the reply to the request (e.g. an associates list including status information) has been received, the associates list, with status information including mobile device activation status, is processed (e.g. displayed) by the requesting device 306.

Next, a determination is made 308 as to whether user input has been received. Once user input has been received, a determination is made 309 as to whether the user has requested to discontinue the associates list processing operation 300. For example, a user may determine that the mobile device for an associate of interest is off-line and may want to end processing. When the determination is made 309 that the associates list processing operation 300 is to end, the associates list processing operation 300 is terminated. Otherwise, if the mobile device for the associate of interest is on-line, a decision 310 determines whether a text message or a voice call (or some other communications method such as causing the contacted device to vibrate or make some sound or perform some other task) is to be made or sent to the selected one of the associates of the displayed associates list. Here, both the sending and receiving communication devices are assumed to support both text messages (e.g., instant messages), voice calls and/or other communication means (e.g. audio and non-audio alerts). Often, a user desiring to communicate with an associate will prefer sending a short text message to the associate -such as when either user is in a meeting and cannot carry on a voice call but can discretely send a short text message.

When a determination is made 310 that a voice call is to be attempted, a call to the selected associate may be initiated 312. On the other hand, when the determination is made 310 that a text message is to be sent, the mobile device enters a text entry mode of operation where a user of the mobile device may enter a text message. Next, the entered text message is sent 316 to the selected associate. After the text message is sent the associates list processing operation 300 is complete and ends.

According to the principles of the present invention, a list or grouping of mobile devices to be monitored for a requesting mobile device is maintained and managed on a remote server device (e.g. associates status server 112 of Figure 1A). When a user of the monitoring mobile device requests, this list or grouping is forwarded via a wireless communication network (e.g. wireless carrier network 104 of Figure 1A) in a format that may be processed by the requesting mobile device. That format may take any suitable form, for example, a markup language such as HDML, WML, XML, HTML, or cHTML. Once received by the requesting mobile device, the list or grouping may be displayed and the user of the requesting mobile device may take some action based on the information contained in the list or grouping. That action may be an attempt to contact one or more of the users of one of the monitored mobile devices based on contact information (e.g. phone numbers or URIs) embedded in or otherwise associated with the list or grouping.

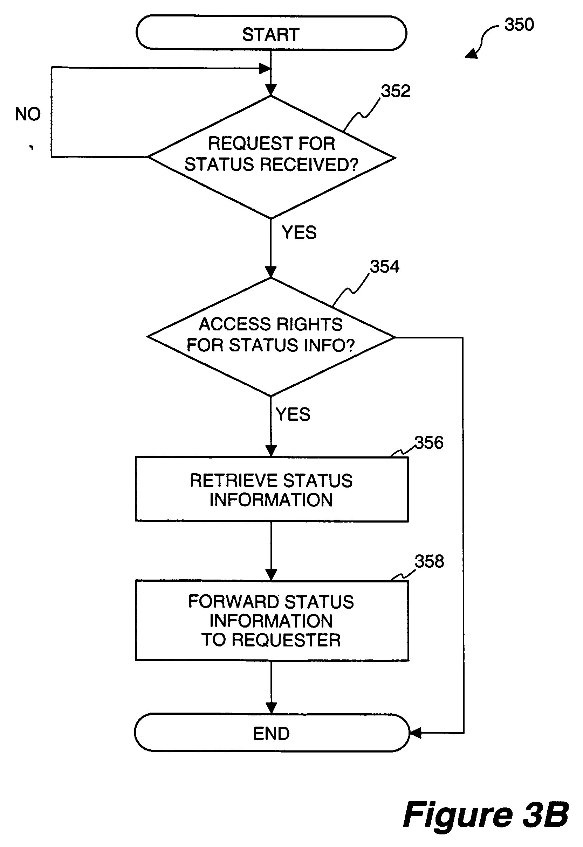

Figure 3B is a flow diagram of associate status information request processing operation 350 by a server device having access to that information according to one embodiment of the present invention. The associates status information request processing operation 350 is, for example, performed by the Status Information Management Server System 110 as illustrated in Figure 1A.

Associates status information processing operation 350 begins with a determination 352 as to whether a request for status information for one or more associates on an associates list (i.e., the monitored mobile devices associated with users of interest) has been received at a first server device having access to that information. The request may be sent by a second server device (e.g. associate status server 112 of Figure 1A) acting on behalf of a mobile device (e.g. mobile devices 102 of Figure 1A) or by the mobile device itself. It is important to note that the functions of the status information management server (e.g. 110 of Figure 1A) and the associate status server may be performed by the same server device if the monitoring and monitored mobile devices belong to the same wireless carrier network.

The associate of interest may be identified by a subscriber identifier retrieved from a database (e.g., associates mapping data store 284). Next, a determination is made at 354 as to whether the requestor has access rights to the requested status information. The user of a monitored mobile device would typically need to provide some indication that the requested information may be released. For example, when the account for the monitored mobile device is set up, the user could specify that this information may be universally released when requested or a request for a release could be sent to the user. Access rights are described in further detail below.

If the user has access rights to the requested status information, then the information is retrieved at 356. Otherwise the process is terminated. The retrieved status information and related information is forwarded to the requesting entity 358 (i.e. associate status server 112) and ultimately to the monitoring mobile device in a suitable format. For example, with a mobile device using a network browser supporting HDML, then one suitable display format would be an HDML deck in which a series of screen displays are provided within the deck. The suitable display format could also be a text file or a markup language such as WML, HTML, XML, compact HTML or any suitable file format. Information relating to the status of monitored mobile devices may also be presented to the user using symbols (e.g. icons), sounds and other notification methods.

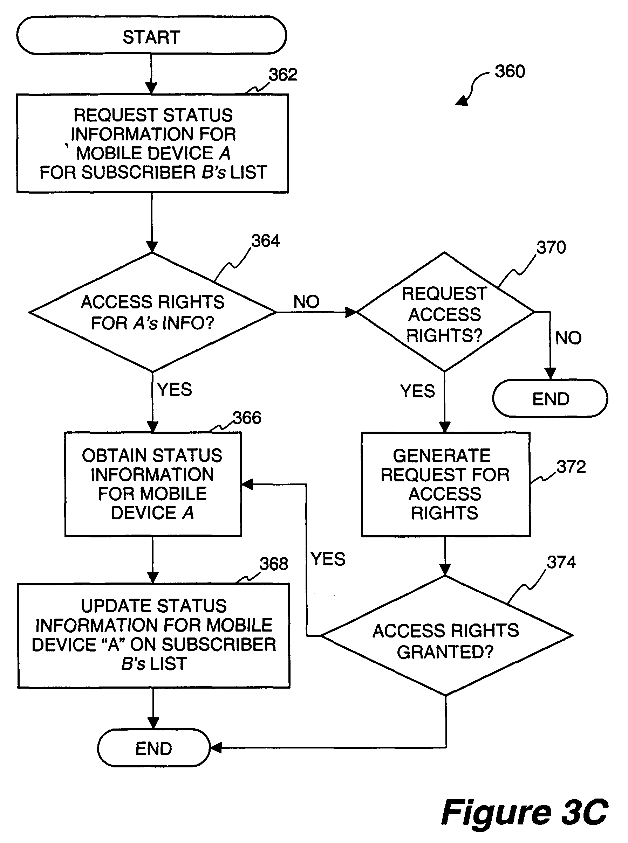

Figure 3C is a flow diagram which provides additional details relating to access rights which may be associated with the status information described above. When a request for status information for a designated mobile device (i.e. Mobile Device *A*) is received at 362, where that request is associated with a subscriber's associates list (i.e. Subscriber *B's* List), then a determination is made at 364 as to whether the subject subscriber (i.e. Subscriber *B*) has received permission from the user of the subject mobile device (i.e. Mobile Device *A*) to receive the requested status information. If the subject subscriber has permission to receive the requested status information (access rights), then the requested status information for the subject mobile device (i.e. Mobile Device *A*) is retrieved at 366 and the subject subscriber's list (i.e. Subscriber *B's* List) is updated.

According to the principles of the present invention, a list of mobile devices allowing access to their status information may be generated and associated with a monitoring mobile device. The status information for the monitored mobile devices, which may include device activation status, device status change or a short message from the user of one of the monitored mobile devices, is retrieved from the wireless network entity which tracks such information. This information may be stored on an intermediate server device (e.g. associates status server 112 of Figure 1A) where it is managed and updated as required. When the monitoring mobile device requests this information, a file in a suitable format (e.g. a markup language) is forwarded. Once received, the monitoring mobile device processes this file. When the user of the monitoring mobile device examines the associates list or attempts to contact one of the monitored associates, status information relating to the monitored mobile devices is presented on the display screen (or via some other aspect of the user interface) of the monitoring mobile device. This allows the user to make an informed decision as to whether or when (or how) to contact the user of one of the monitored mobile devices.

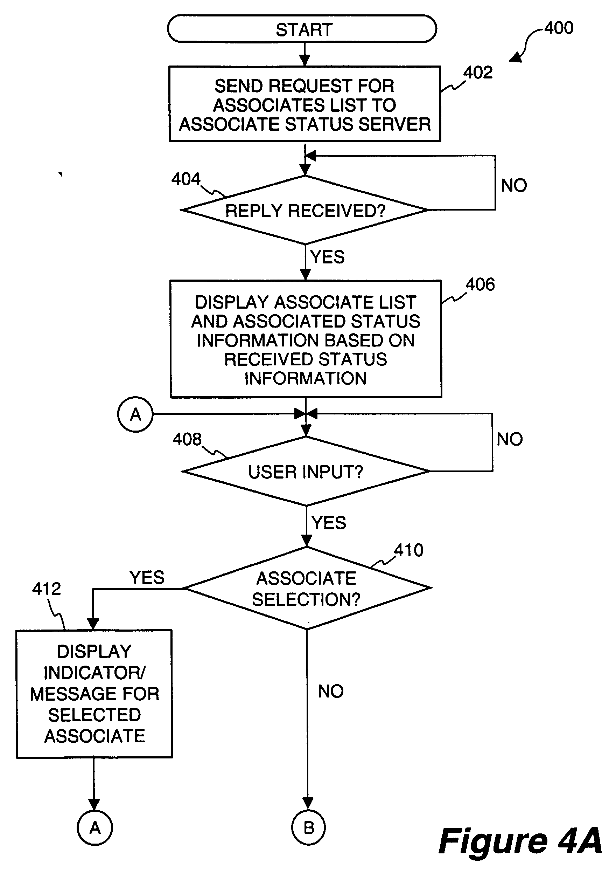

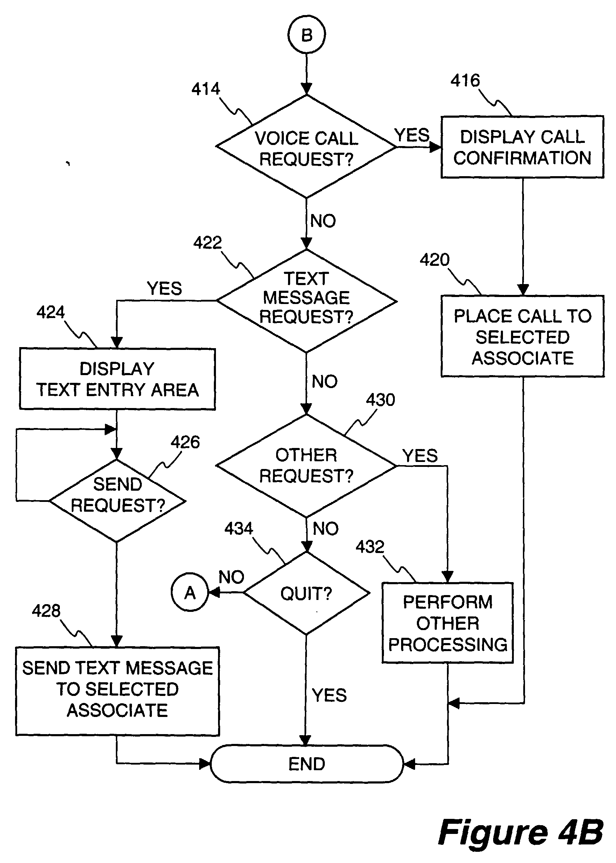

Figures 4A and 4B are flow diagrams which provide additional details of the client-side associates list processing operation 400 described in conjunction with Figure 3A above. The associates list processing operation 400 is, for example, performed by a client application that is executed by a mobile device, such as the mobile devices 102 illustrated in Figure 1A.

Associates list processing operation 400 is initiated when a user of a mobile device requests the display of a current associates list. Once initiated, a request for an associate list is sent 402 to the server device having access to the status information (e.g., associate status manager 112 of Figure 1A). Then, a determination is made 404 as to whether a reply has been received to the request. If a reply has not yet been received, the associates list processing operation 400 awaits the reception of the reply from the server device processing the request or a expiration of a predefined time period. Once a determination is made 404 that the reply has been received, an associates list and associated status information are displayed 406. The associates list can be provided as text or may be provided in a format such as a deck of HDML cards. Such HDML cards could include a priority designator, a message body, or a Universal Resource Locator (URL) that points to another deck of cards which may provide information needed for subsequent actions.

At this point, as explained in detail below, the associates list processing operation 400 waits for a user of the mobile device to interact with the mobile device to make a selection, typically a selection with respect to designation of one of the associates on the associates list being displayed. As discussed below, in this embodiment, associates list processing operation 400 controls designation of an associate, creating and sending text messages, initiating voice calls, or other processing tasks.

Once the associates list and any associated status information are displayed 406, a determination is made 408 as to whether a user input has been received. If the determination is made 408 that a user input has not yet been received, associates list processing operation 400 awaits the reception of a user input or a timeout. Once the determination has been made 408 that a user input has been received, a determination is made 410 as to whether the user input is an associate selection. When the determination is made 410 that the user has selected a particular associate, a status indicator for the selected associate is displayed 412 (if not already displayed) and any associated messages are also displayed (i.e. "In a Meeting Till 5"). Status indicators may be displayed/updated for all monitored associates when the associates list is displayed/updated or status information may be provided only when a particular associate is selected.

When a determination is made 410 that a user input is not an associate selection, then another determination is made 414 as to whether the user input is a voice call request. When the determination is made 414 that the user input is a voice call request, a call confirmation is displayed 416. The display 416 of the call confirmation is optional but can be useful to inform the user of the phone number or address to be called. The call is placed at 420 to the selected number. Following the placement of the call, the associates list processing operation 400 is complete and ends.

When the determination is made 414 that the user input is not a voice call request, another determination is made 422 as to whether the user input is a text message request. When the determination is made 422 that the user input is a text message request, a text entry area is displayed 424. The text entry area allows the user to enter the text for the text message to be sent. Another determination is then made 426 as to whether a user has finished providing the text for the text message and has requested to send the text message. Once the determination is made 426 that the text message has been entered in the text display area and a request to send the text message has been received, then the text message is sent 428 to the selected associate. After the text message has been sent 428, the associates list processing operation 400 is complete and ends.

Note that since the call or text message was requested through the associates list, the user of the mobile device performing the associates list processing operation 400 is able to determine whether the mobile device of the associate of interest is able or unable to receive a message (a text message or a voice call) before attempting to deliver the message. Note also that the user of the mobile device performing the associates list processing operation 400 need not enter the phone number or address of the associate designated for receipt of a message because that information may be extracted from the associates list by means well known in the art.

When the determination is made 422 that the user input is not a text message request, another determination is made 430 as to whether the user input is for another type of request. When the determination is made 430 that the user input is another type of request, other processing may be performed 432 as required. Such other processing can vary widely with implementation, but may include forwarding a message (voice or text) to an alternate device associated with the monitored mobile device or causing the mobile device of interest to perform some task (e.g. an audio or non-audio alert). Following this other processing, the associates list processing operation 400 is complete and ends.

Alternatively, when the determination is made 430 that the user input is not another type of request, another determination is made 434 as to whether the user desires to end the associates list processing operation 400. As an example, once the associates list processing operation 400 is terminated (or otherwise ends), the client application on the wireless communication device can transition to another mode or application. When the determination is made 434 that a termination request has been received, the associates list processing operation 400 is complete and ends. On the other hand, when the decision 434 determines that a termination request has not been received, then the associates list processing operation 400 returns to 408 as is shown in Figures 4A and 4B.

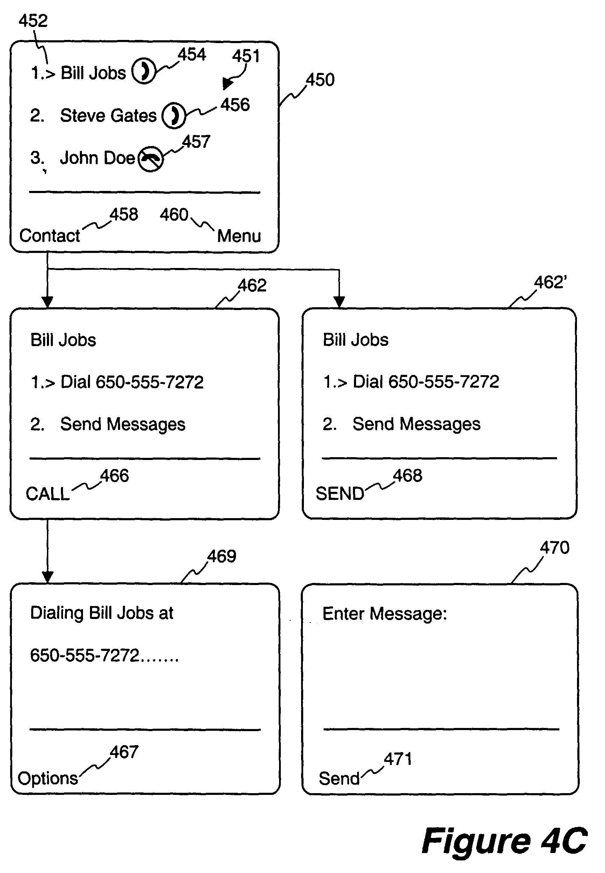

As an example of a representative graphical user interface for the associates list processing operation 400, Figure 4C illustrates screen displays associated with presenting an associates list and sending a text message. Initially, a screen display 450 having an associates list 451 is displayed. Here, presumably, the user of the mobile device having screen display 450 displayed on its display screen lists "Bill Jobs", "Steve Gates" and "John Doe" as associates within the associates list 451. Screen display 450 also includes a selection indicator 452 indicating the particular one of the entries being selected. In this example, the first entry ("Bill Jobs") is selected. Screen display 450 also displays status indicators 454, 456 and 457. The status indicators 454, 456 and 457 are displayed based on the status information for the selected associate's mobile device. The status indicators 454 and 456 displayed adjacent to "Bill Jobs" and "Steve Gates" respectively indicate that these associates have their mobile device active (or on-line) as of the last monitoring cycle. The status indicator 457 displayed adjacent "John Doe" indicates that the associate's mobile device is inactive (or off-line) as of the last monitoring cycle. The screen display 450 also provides a "Contact" softkey 458 which enables the user to send either a text or voice message to the selected associate, and a "Menu" softkey 460 which enables the user to refresh the display screen with a Menu screen display offering the user additional choices.

Upon user selection of the "Contact" softkey 458 with the selected associate being "Bill Jobs", a screen display 462 is presented on the display screen. The screen display 462 indicates the associate and provides the user with a choice of message type, namely, place a voice call or send a text message. The screen display 462 also includes a selection indicator 464 that the user can control to pick the message type to be used. The screen display 462a shows the voice call message type being selected, and thus has a "Call" softkey 466. When the user activates the "Call" softkey 466, the voice call is invoked. Alternatively, when the select indicator 464 indicates that a text message is desired, screen display 462b is presented on the display screen. In this case, the softkey 466 is a "Send" softkey 468. Upon activation of the "Send" softkey 468, a screen display 470 is presented on the display screen and allows the user to enter text for a text message.

In one embodiment, the status information management server system returns a deck of cards (e.g., HDML or WML cards) to the mobile device that implement the associates list with associated status information. The deck of cards, for example, can be used to implement the display screens 450, 462a, 462b and 470 shown in Figure 4C.

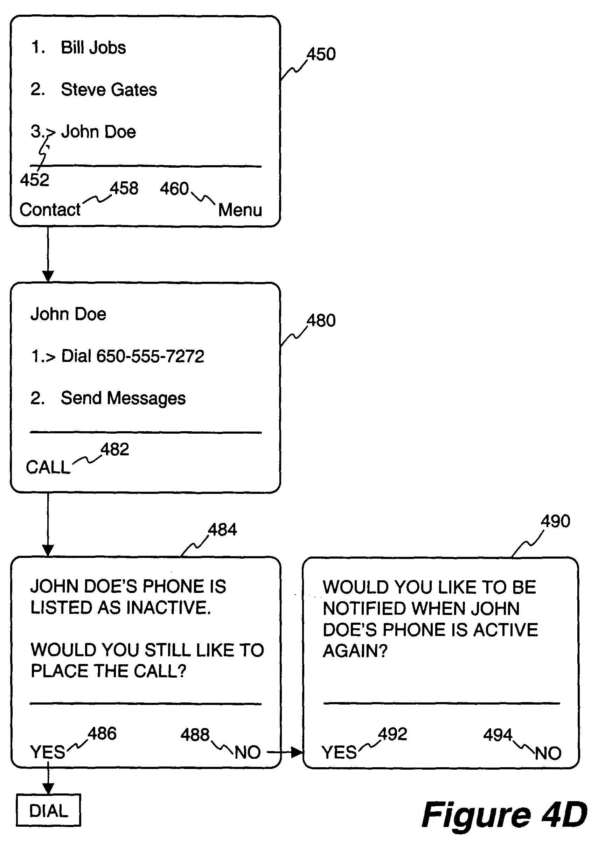

Figure 4D illustrates screen illustrates an interactive associates list processing method according to an embodiment of the invention. In this alternate embodiment a user attempting to contact "John Doe" by dialling his phone number 480 when his mobile device is listed as inactive might see a screen display like that presented in screen display 484. In this example, the associates mobile device activation status information is stored in the background and an attempt to dial a number for a particular mobile device having an off-line status indication causes a text message to be generated which indicates that "John Doe's" phone is inactive but gives the user the option of trying the call anyway or requesting notification when "John Doe's "phone becomes active 490.

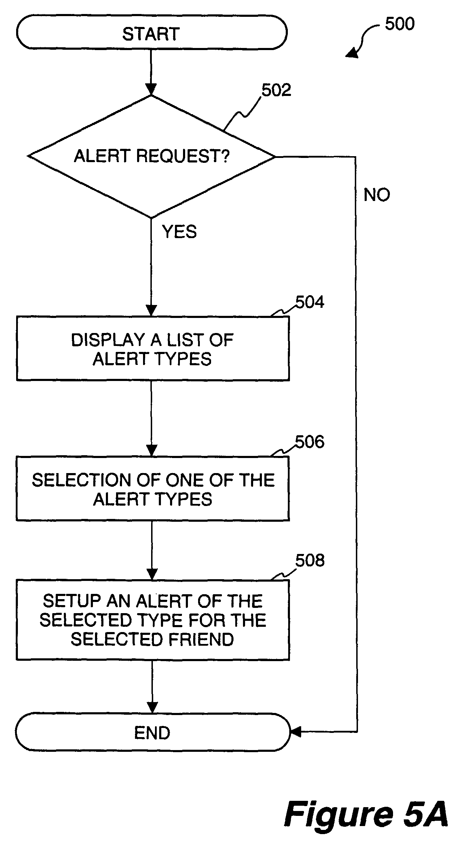

Figure 5A is a flow diagram of the steps involved in notification processing operation 500 according to one embodiment of the invention. Notification processing operation 500 is, for example, performed by a network browser or client-application executing on a mobile device. Notification processing operation 500 begins with a determination 502 as to whether an alert is requested. In effect, when an alert is requested, notification processing operation 500 is initialized. In particular, when a determination is made 502 that an alert is requested, a list of alert types is displayed 504, for example, on the display screen of the mobile device. Then, one of the alert types is selected 506 by a user of the mobile device. Next, an alert of the selected type is setup 508 for a selected associate. Typically, the alert is setup by notifying the status information management system (110 of Figure 1A) that an alert should be sent to the mobile device of the user (of the monitoring mobile device) when a designated mobile device displays a status change. Following alert setup 508, the establish-notification processing operation 500 is complete and ends.

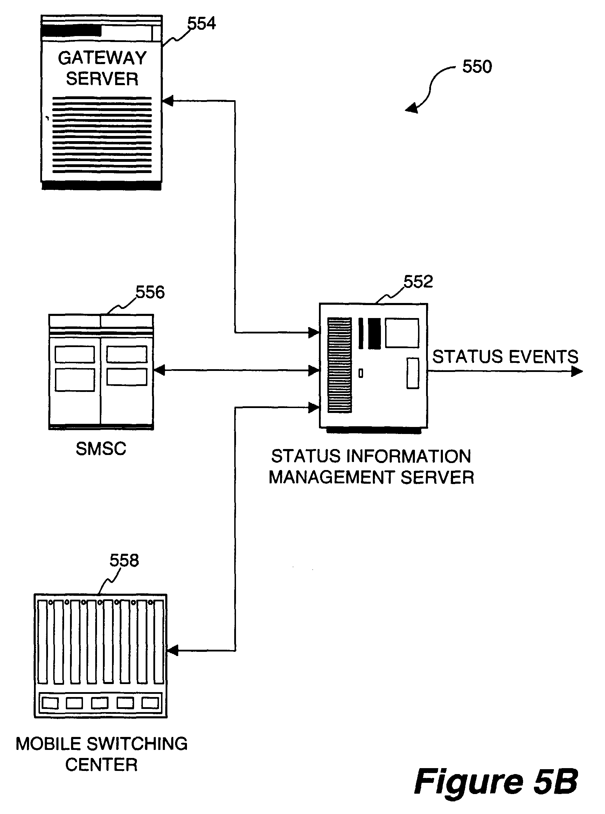

Figure 5B is a block diagram of a presence detection system 550 according to one embodiment of the invention. The presence detection system 550 includes a status information management server 552, which couples to a gateway server device 554, a Short Message Service Center (SMSC) 556, and a mobile switching center 558. Presence detection server 552 is a network server that collects and consolidates availability information for monitored mobile devices from various sources. Status information management server 552 can integrate with a variety of network elements in order to gather a near real time portrait of the status information for a plurality of monitored mobile devices. The precise integration technique will depend on the particular wireless network the mobile device is utilizing. For example, in a North American CDMA (IS-95) wireless network, the status information management server 552 can integrate with an IS-41 network to gather IS-41 events, such as mobile activation. In a GSM network, the status information management server 552 could gather MAP events. Similarly, in other types of networks, the status information management server, or a functional equivalent, will gather status information relating to designated monitored mobile devices.

The status information management server 552 will also be capable of gathering events and information from other network elements, including the gateway server device 554 and the SMSC 556. In one embodiment, the status information management server 552 receives a variety of platform-specific events, and applies techniques specific to those events in order to determine subscriber availability. For example, gateway server device 554 knows when the subscriber's mobile device has registered for a browsing session, and can report this as an event. As another example, the SMSC 556 knows when messages are pending for the user (i.e., indicating user unavailability). As still another example, the mobile switching center 558 will know when the mobile device registers with the network, when it misses a periodic re-registration, etc. These events can be analysed to obtain a reliable indication of the overall status of a monitored mobile device. For example, if the SMSC 556 reports that messages are pending, then the mobile device is marked as not available. Later, the MSC 558 may report that the mobile device has registered on the network, indicating that the mobile device is once again available.

In one embodiment, status information stored in the status data store 282 and the associate mapping data store 284 is used to trigger status notifications. The status information management server 552 is responsible for updating the status field in the status data store 282. A representative algorithm for these purposes is as follows:
Find all users in the status data store 282 (associate_status_tbl) who are on someone's associate list and whose status in the status data store 282 is different than the status in the associate mapping data store 284 (friend_mapping_tbl). If the data store where an SQL database, this would be accomplished by the following:
   SELECT
      B.rid, B.subscriber, A.status, A.name, A.phone, B.presence_alert
   FROM
      associate_status_tbl A, associate_mapping_tbl B
   WHERE
      A.subscriber = B.associate AND NOT A.status = B.status
For each such user, then (i) update the status in the associate mapping data store 284 with the value in the more current status in the status data store 282, and (ii) send a notification to the subscriber indicating that the associate's status has changed, provided the subscriber desires to receive such notifications (and is authorized to receive such information).

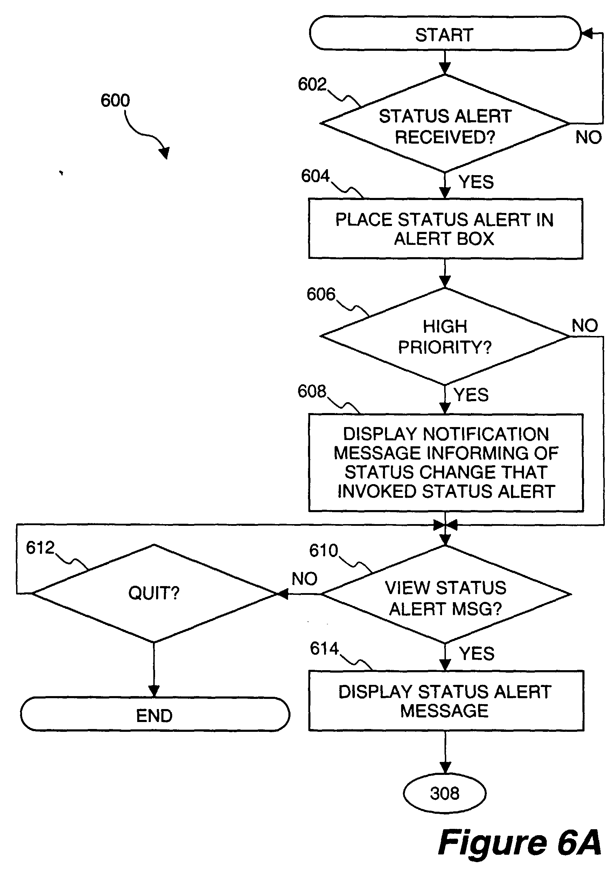

Figure 6A is a flow diagram of application notification processing operation 600 according to one embodiment of the invention. Application notification processing operation 600 is initialized when a mobile device receives an alert notification. The alert notification pertains to an alert previously setup in accordance, for example, with the establish notification processing operation 500 illustrated in Figure 5A.

The application notification processing operation 600 begins with a determination 602 as to whether a status alert has been received. Once a status alert has been received, the application notify processing operation 600 is effectively initialized. Once initialized, the received status alert is placed 604 in an alert inbox. The alert typically resides in the memory of the mobile device that received the status alert. In other words, the incoming status alert is associated with the particular mobile device that previously setup the alert request. Next, a determination is made 606 as to whether the received status alert is a high priority alert. When the determination is made 606 that the received status alert is a high priority alert, a notification message informing of the status change that invoked the status alert is displayed 608. When the received status alert is not a high priority alert, a decision is made 606 which causes the displaying 608 of the notification message to be bypassed or delayed.

In general, the priority levels for the alerts can include high priority, medium priority, low priority and no priority. Different actions can be setup as responses to each type of priority. For example, with high priority, a message can immediately pop-up on the display screen and a beep can be caused to occur. With a minimum priority, no message pop up occurs, but the mobile device can be caused to emit a beep. With low priority, a light or symbol can be caused to flash. With no priority, no notification is performed.

Following the display 608 of the notification message or following the decision 606 when the displaying 608 is bypassed, a determination is made 610 as to whether a status alert message is to be viewed. When the determination is made 610 that a request to view the status alert message has not been received, another determination is made 612 as to whether a quit has been requested. When a termination request is received, the application notify processing operation 600 ends. Alternatively, when a termination request has not been received, the application notify processing operation 600 repeats as illustrated in Figure 6A. On the other hand, when the decision 610 determines there has been a request to view the status alert message, the status alert message is displayed 614. Thereafter, the application notify processing 600 can prepare and send a reply message to the sender. The processing used to prepare and send a replay message can be similar to the blocks 308-318 of Figure 3A.

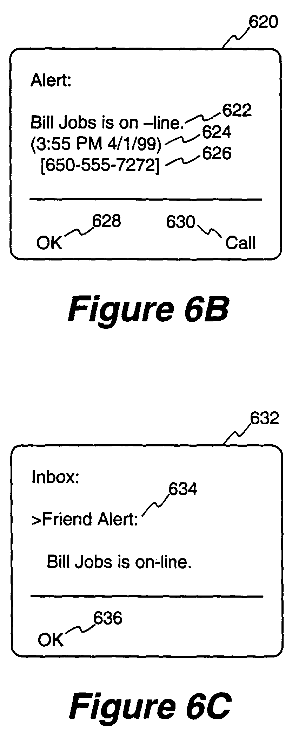

As an example of a representative graphical user interface for the application notify processing operation 600, Figures 6B and 6C illustrate representative screen displays that can appear on the display screen of the mobile device and which are related to receiving status alerts. Figure 6B illustrates a representative high priority notification message screen display 620. Here, the user of the mobile device having the screen display 620 displayed on its display screen has "Bill Jobs" as an associate and requested a high priority alert when "Bill Jobs" comes on-line. The high priority notification message pops up on the display screen to immediately notify the user of the mobile device. In this example, the high priority notification message screen display 620 includes a message statement 622 ("Bill Jobs is on-line"), a time stamp 624 indicating when "Bill Jobs" came on-line, and a phone number 626 for "Bill Jobs". The screen display 620 also provides an "OK" softkey 628 and a "Call" softkey 630 which enables the user to send either a text or voice message to the associate that is the subject of the alert.

Figure 6C illustrates a representative alert inbox screen display 632 having a brief alert message 634. The brief alert message 634 indicates that "Bill Jobs" is on-line. The alert inbox screen display 632 is displayed on the display screen when the inbox is selected. The screen display 620 also provides an "OK" softkey 628, which enables the user to receive more details (such as the screen display 620) pertaining to the alert or to send either a text or voice message to the selected associate.

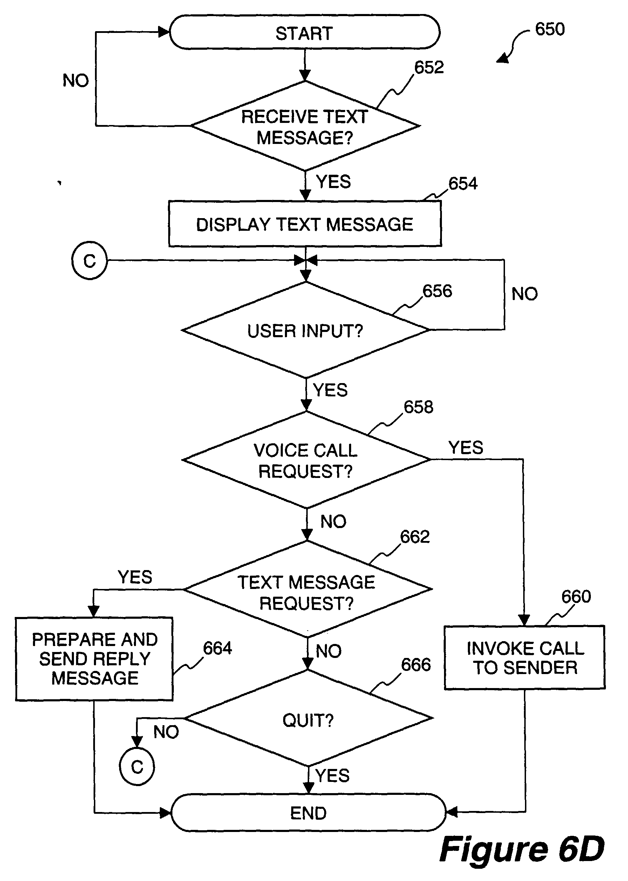

Figure 6D is a flow diagram of message read and reply processing operation 650 according to one embodiment of the invention. Message read and reply processing operation 650 is performed by a mobile device upon receiving an incoming text message. Message read and reply processing operation 650 begins with a decision 652 as to whether a text message has been received. In effect, decision 652 causes message read and reply processing 650 to be invoked once a text message has been received. After receiving the text message, the text message is displayed 654. As an example, many mobile devices have an inbox for receiving incoming text messages. Hence, the text message can be stored in the inbox for subsequent retrieval by a user of the mobile device. Once the text message is retrieved from the inbox, it is displayed on the display screen of the mobile device.

After the text message has been displayed, message read and reply processing operation 650 determines at decision 656 whether a user input has been received. If no user input has been received, decision 656 causes message read and reply processing 650 to await user input. Once user input has been received, a determination is made 658 as to whether the user input is a voice call request. When a determination is made 658 that the user input is a voice call request, a call is placed 660 to the sender. Here, the recipient of the text message is able to efficiently place a call to the sender of the text message to provide a response to the message during the voice call. After the call has been placed to the sender, message read and reply processing operation 650 is complete and ends.

Alternatively, when the determination is made 658 that the user input is not a voice call request, another determination is made 662 as to whether the user input is a text message request. When the determination is made 662 that the user input is a text message request, a reply message is prepared and sent 664. After the reply message has been sent, the message read and reply processing operation 650 is complete and ends.

When the user input is neither a voice call request, or a text message request a determination is made 666 as to whether the user input is a termination request. When the user input is a termination request, message read and reply processing operation 650 is complete and ends. Alternatively, when the user input is not a termination request, the message read and reply processing operation 650 repeats the decision 656 and subsequent processing stages.

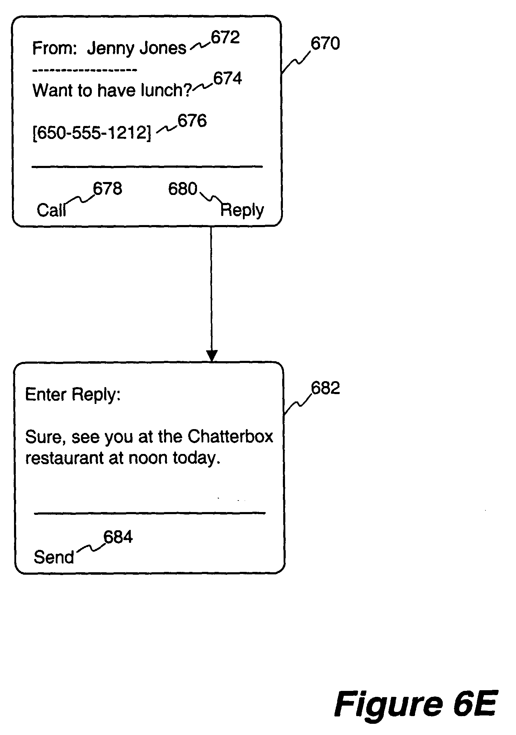

FIG. 6E illustrates a representative text message screen display 670 that is displayed on the display screen of the mobile device. Text message screen display 670 includes a sender designation 672, a message body 674 and a telephone number indicator 676 for the sender. Here, the message body 674 contains a question for the recipient -- "Want to have lunch?". The user of the mobile device that has received the incoming text message can then either directly call the sender using a "Call" softkey 678, or prepare and send a reply text message using a "Reply" softkey 680. When the user of the mobile device selects the "Reply" softkey 680, a screen display 682 is presented on the display screen of the mobile device. The screen display 682 is a reply text entry screen that enables the user of the mobile device to enter a reply text message. Screen display 682 also includes a "Send" softkey 684, which enables the user to send the reply message to the sender of the original text message.

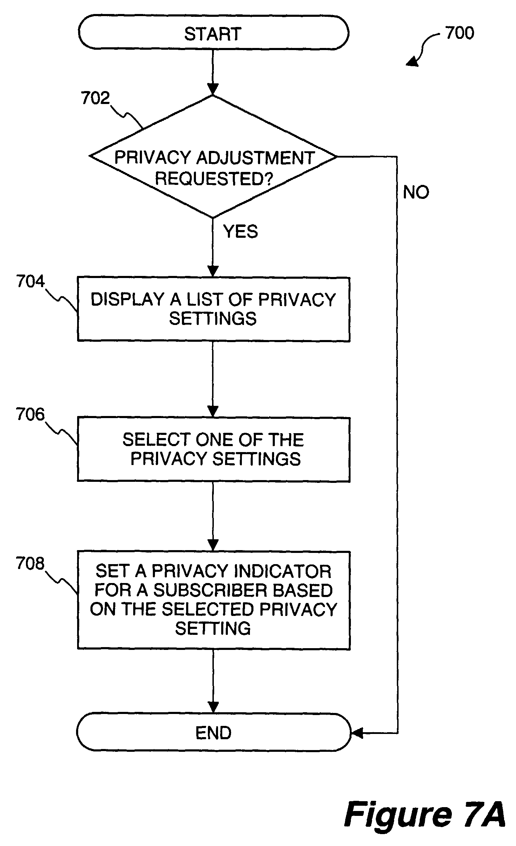

Figure 7A is a flow diagram of privacy settings processing operation 700 according to one embodiment of the invention. Privacy settings processing operation700 begins with a determination 702 as to whether a privacy adjustment is requested. When the determination is made 702 that a privacy adjustment is requested, privacy setting processing operation 700 is initialized; otherwise, the privacy settings processing operation 700 is bypassed. For example, the user of a mobile device could use the this operation to limit or prevent status monitoring of their mobile device.

Once privacy setting processing operation 700 is initialized, a list of privacy settings are displayed 704. For example, the list of privacy settings is displayed on a display screen of the mobile device. Next, one of the privacy settings is selected 706. Here, a user of the mobile device views the list of privacy settings being displayed 704 and selects one of the privacy settings to be utilized with respect to the mobile device. Then, a privacy indicator for the subscriber is set 708 based on the selected privacy setting. Here, the privacy indicator for the user (subscriber) is stored in a database (e.g., associate mapping data store 284 of database storage 280) for subsequent retrieval. For example, the database storage can be database storage 112 illustrated in Figure 1A or database 280 illustrated in Figure 2D. After the privacy indicator for the subscriber is set 708, the privacy settings processing operation 700 is complete and ends.

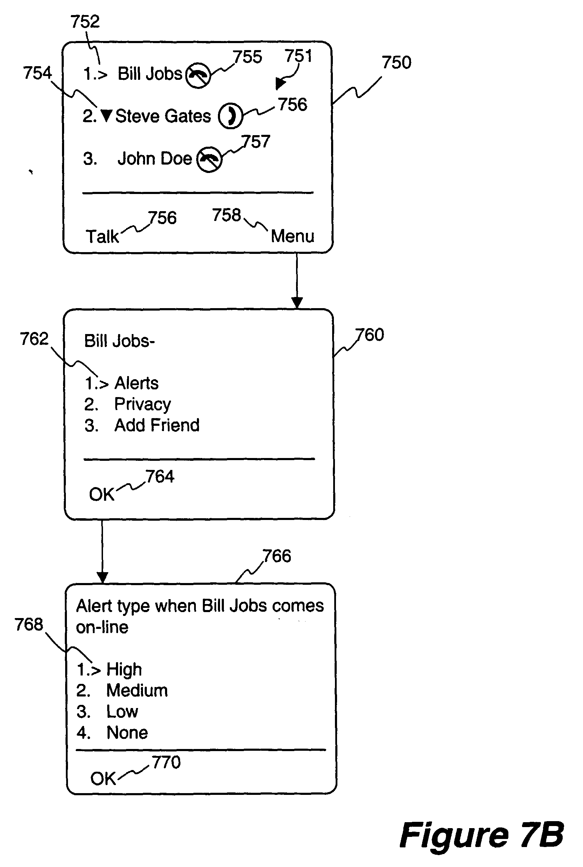

As an example of a representative graphical user interface for privacy settings processing operation 700, Figure 7B illustrates representative screen displays presenting a associates list and setting of alert priorities. Initially, a screen display 750 having an associates list 751 is displayed. Here, presumably, the user of the mobile device having screen display 750 displayed on its display screen has "Bill Jobs", "Steve Gates" and "John Doe" as associates. These three associates are contained within associates list 751. Screen display 750 also includes a selection indicator 752 indicating the particular one of the entries being selected. In this example, the first entry ("Bill Jobs") is selected. The screen display 750 also displays activation status indicators 755, 756 and 757. The activation status indicators for each of the entries of associates list 751 are generated based on the status information. The status indicator 756 displayed adjacent "Steve Gates" indicates that associate "Steve Gates" has his mobile device active (or on-line) as of the last monitoring cycle. The status indicators (755 and 757) displayed adjacent to associates "Bill Jobs" and "John Doe" respectively, provides an indication that these associates have their devices inactive (or off-line) as of the most recent monitoring cycle. Screen display 750 also provides a "Talk" softkey 756 which enables a user to send either a text or voice message to the selected associate, and a "Menu" softkey 758 which enable the user to refresh the display screen with a Menu screen display offering the user additional choices. Additionally, indicator 754 provides an indication to the user that a change of status alert has been set for associate "Steve Gates".

Upon user selection of the "Menu" softkey 758 where the selected associate is "Bill Jobs", a screen display 760 is presented on the display screen. The screen display 760 indicates a list of menu items available to the user, namely, Alerts, Privacy, and Add Associate operations. Screen display 760 also includes a select indicator 762 indicating the particular one of the entries (operations) being selected. In this example, the first entry ("Alerts") is selected. Screen display 760 also provides an "OK" softkey 764 to invoke the selected entry (operation).

Upon user selection of the "OK" softkey 764 with the "Alerts" being selected, a screen display 766 is presented on the display screen. Screen display 766 indicates a list of alert types available to the user, namely, high, medium, low and none. Screen display 766 also includes a select indicator 768 indicating the particular one of the alert types being selected. In this example, the first alert type ("High") is selected. The screen display 766 also provides an "OK" softkey 764 to invoke the selected alert type.

Additionally, the user of a monitored mobile device can choose to have their status information augmented with user supplied information. For example, the user can input a text string such as "I am in a meeting" or "I am busy" or "I am available" or an iconic symbol with a well-known or predefined meaning. This information is combined with the network status information (e.g. active or inactive) to provide a near real-time indication of a monitored user's status and availability for exchanging messages.

The associates list may be associated with or used in conjunction with applications resident within the mobile device. Address book applications, calendar applications and email applications are examples of such applications. For example, the associates list could be generated from a users address book or local contact list. Changes to the address book would be reflected in the associates list and the user would not be required to make duplicate entries. One of ordinary skill in the art would understand that the process is also applicable to network applications (e.g. an address book resident on a network server but managed from the mobile device).

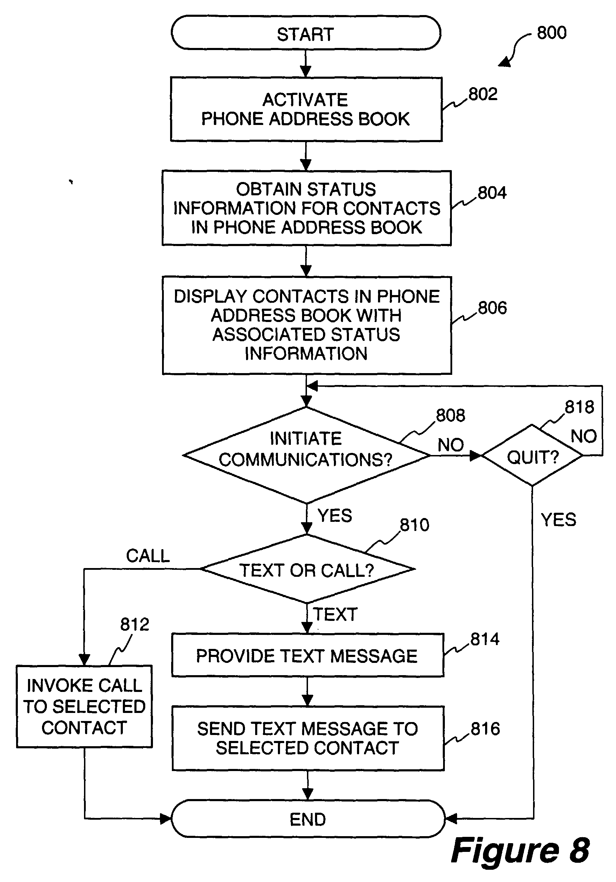

Figure 8 is a flow diagram of an address book processing operation 800 according to one embodiment of the invention. Address book processing operation 800 is, for example, performed by a client-side application for the wireless communication device. The address book processing operation 800 need not be performed by a network browser operable on the mobile device, but can be a stand alone application or embedded within another functional application, such as an address book application.

The address book processing operation 800 initially activates an address book 802. Here, the address book is displayed on a display screen of the mobile device. The address book, for example, includes names and telephone numbers for people or businesses. The address book (or phone book) can also include addresses for the people or the businesses. The people or businesses within the address book may be referred to as contacts. The address book is provided by an address book application that executes on the mobile device.

Next, status information for the contacts in the address book is obtained 804. As an example, the status information can be obtained from a server and database such as the server 110 and associate status server 112 illustrated in Figure 1A. Next, contacts in the address book are displayed 806 with the associated status information. By displaying the status information associated with the contacts, the user of the mobile device using the address book can determine whether communication devices (and perhaps what communication devices if any), are in use (active) by their contacts listed in the address book.

Next the user is queried 808 as to whether the user desires to initiate communications with one of the contacts in the address book. When a determination is made 808 that the user does desire to initiate communications with one of the contacts in the address book, another determination is made 810 as to whether the message to be sent is a text message or a voice call. When the determination is made 810 that the message to be sent is a voice call, a call to the selected contact is placed 812. On the other hand, when the determination is made 810 that the message to be sent is a text message, the text message is provided 814. For example, the text message can be provided by data entry from a user of the mobile device. Next, the text message is sent 816 to the selected contact. After the text message has been sent 816 or after the call to the selected contact is placed 812, address book processing operation 800 is complete and the routine ends.

Alternatively, when a determination is made 808 that a message (text or voice) is not to be sent (i.e., a communications is not to be initiated), another determination is made 818 as to whether a termination request has been received. When a determination is made 818 that a termination request has been received, address book processing operation 800 is complete and ends. On the other hand, when the a determination is made 818 that a termination request has not been received, then address book processing operation 800 returns to repeat the decision 808 and subsequent blocks.

In accordance with the principles of the present invention, status information relating to one or more monitored devices is presented to the user of a monitoring mobile device. In one embodiment, the status information includes a status indicator (e.g. a symbol or icon) which provides an indication of the operational status (e.g. on or off) of a monitored device. Generally, a remote mobile device is active if it is able to receive messages (e.g., voice calls or text messages). In the case of a cellular phone, active means that the cellular phone is turned on and within range of a supporting wireless network carrier. On the other hand, inactive may mean that the cellular phone is either turned off or not in contact with the wireless network providing service. Note that due to various possible network and system delays, the status information obtained may not actually reflect the current status of monitored devices. Thus, the status information reflects the status of the monitored mobile device as was indicated during the most recent monitoring cycle for which information could be obtained.

Note that while Figures 4C and 7B use a particular symbol for the status indicator, any suitable symbol or other visual indication may be used. Other indicators, symbols, alphanumeric characters, icons, or other visually distinct objects may be used to indicate the status of remote devices. The status information can also be more specific in terms of the information conveyed by using one or more status indicators. Namely, status indicators could indicate that the associated mobile device is active, was recently active, not active or has an unknown activation status. The status indicators could also indicate whether the mobile device is in use or out of range. Also, in the case where the monitored status information is unknown, such an indication could be displayed. Additionally, the status identifier or an additional identifier or symbol can be provided to indicate whether the telephone number associated with the remote device corresponding to a contact is for a land-based phone or a wireless phone. Still further, the status indicators could vary as a function of the type of communications device.

The invention can take the form of a computer readable code on a computer readable medium (i.e. a substrate). The computer readable medium is a data storage device that can store data, which can thereafter, be read by a computer system. Examples of a computer readable medium include read-only memory, random-access memory, CD-ROMs, magnetic tape, optical data storage devices and carrier waves. The computer readable medium can be distributed over a network coupled computer system so that the computer readable code is stored and executed in a distributed fashion.

The advantages of the invention are numerous. Different embodiments or implementations may yield one or more of the following advantages. One advantage of the invention is that users can be visually informed of status information pertaining to other communication devices, even wireless communication devices. Another advantage of the invention is that user are able to send, receive and reply to test messages with associates on wireless communication devices with great ease. Still another potential advantage of the invention is that status alerts can be provided when friends or associates come on-line with their wireless communication devices. Yet another advantage of the invention is a privacy control mechanism that allows users to control the dissemination of their status information. Yet another advantage of the invention is that wired communications devices, even desktop computers, can utilize the features of the invention.

The many features and advantages of the present invention are apparent from the written description, and thus, it is intended by the appended claims to cover all such features and advantages of the invention. Further, since numerous modifications and changes will readily occur to those skilled in the art, it is not desired to limit the invention to the exact construction and operation as illustrated and described. Hence, all suitable modifications and equivalents may be considered to fall within the scope of the invention.

## Claims

1. A method of providing status information to a wireless communication device for a plurality of mobile device, the method comprising:-
retrieving status information for the plurality of designated mobile devices;
generating a file containing identifiers for the plurality of designated mobile devices and the retrieved status information; and
forwarding the generated file to the wireless communication device.

2. A method as recited in claim 1 further comprising:-
omitting status information for those mobile devices among the plurality of designated mobile devices for which an associated user provides an indication that status information should not be released to third parties; and
omitting status information for those mobile devices among the plurality of designated mobile devices when an associated user has not provided an indication that status information may be released to third parties.

3. A method as recited in claim 1 or 2 further comprising:-
requesting access rights for status information from those mobile devices among the plurality of designated mobile devices for which the wireless client device does not have access rights;
receiving a request for status information monitoring, the request including identifiers for the one or more mobile devices to be monitored.

4. A method as recited in any preceding claim further comprising:-
forwarding the generated file to one or more of the plurality of designated mobile devices.

5. A method as recited in any preceding claim further comprising:-
forwarding the generated file to a designated communication device.

6. A method for interacting with a wireless communication device having a display screen and user interface, the method comprising:-
retrieving status information for a plurality of previously identified mobile devices at pre-determined intervals;
generating a list including a representation of the retrieved status information and an identifier for each of the plurality of previously identified mobile devices; and
forwarding the list to the wireless communication device.

7. A method as recited in claim 6 wherein the representation of the retrieved status information is an alphanumeric string and wherein the representation of the retrieved status information is a symbolic indicator.

8. A method as recited in claim 6 or 7 further comprising:-
obtaining identifiers for designated communication devices that are to receive the list; and
forwarding the list to the designated devices.

9. A computer product executable by a computing device, the computer product including computer program code for providing status information on the display screen of a wireless communication device, the computer product comprising:-
computer program code for retrieving a list containing status information for a plurality of previously identified mobile devices; and
computer program code for displaying the list containing identifiers and status information for the plurality of previously identified mobile devices on the display screen of the wireless communication device.

10. A computer product executable by a computing device, the computer product including computer program code for providing status information on the display screen of a wireless communication device, the computer product comprising:-
computer program code for establishing an alert request relating to changes in device status for one or more mobile devices among a plurality of previously identified mobile devices; and
computer program code for receiving an alert in accordance with the alert request when one or more of the previously identified mobile devices is indicated as having an altered status.

11. A computer product as recited in claim 10 further comprising:-
computer program code for determining whether the alert priority exceeds a predetermined priority level; and
computer program code for immediately displaying a notification message informing of status change that triggered the alert when the alert priority is greater than the predetermined priority level.

12. A wireless communication device having a display screen and user interface, the device comprising:-
a storage device for storing a list containing status information and identifiers for a plurality of previously identified mobile devices;
a memory for storing program code for a processor; and
a processor coupled to said storage device and said memory, wherein the processor operates to execute the program code stored in the memory to retrieve and store a list containing status information and identifiers for a plurality of previously identified mobile devices from a remote server device and display it on the display screen of the wireless communication device.
